# EUROPEAN PATENT APPLICATION

(11) **EP 4 851 766 A1**
(43) Date of publication of application: **09.12.2026**
(21) Application number: 24921678.9
(22) Date of filing: 29.11.2024
(51) Int. Cl.: G06F 3/0481

(54) **RESOURCE OBJECT PROCESSING METHOD, APPARATUS AND DEVICE, AND STORAGE MEDIUM**

(30) Priority: 04.02.2024 CN 202410160281
(71) Applicant: Beijing Zitiao Network Technology Co., Ltd., Beijing 100190 (CN)
(72) Inventor: FAN, Zesheng, Beijing 100028 (CN); ZHANG, Xingyu, Beijing 100028 (CN)
(74) Representative: Grünecker Patent- und Rechtsanwälte PartG mbB
(86) International application number: PCT/CN2024/135800
(87) International publication number: WO 2025/161656

(57) **Abstract**

The present disclosure provides a resource object processing method, an apparatus, a device, and a storage medium. The method includes: displaying resource objects in a target favorites on a first page, where a resource object caching control is provided on the first page, and the resource objects are added to the target favorites by a target user account in advance; and determining a target caching object from the resource objects in the target favorites and caching the target caching object in local storage space corresponding to the target user account in response to a trigger operation on the resource object caching control.

## Description

### CROSS-REFERENCE TO RELATED APPLICATION(S)

The present application claims priority to Chinese Patent Application No. 202410160281.0, filed on February 4, 2024, and entitled "RESOURCE OBJECT PROCESSING METHOD, APPARATUS, DEVICE, AND STORAGE MEDIUM", which is hereby incorporated by reference in its entirety.

### FIELD

The present disclosure relates to the field of data processing, and in particular, to a resource object processing method, an apparatus, a device, and a storage medium.

### BACKGROUND

With the continuous development of network technology, users' requirements for functions related to favorites become more and more diverse, for example, requirements for relevant interaction with resource objects that have been added to the users' favorites are getting higher and higher.

### SUMMARY

In order to solve the above technical problems, embodiments of the present disclosure provide a resource object processing method, an apparatus, a device, and a storage medium.

In a first aspect, the present disclosure provides a resource object processing method, the method includes:
displaying resource objects in a target favorites on a first page, where a resource object caching control is provided on the first page, and the resource objects are added to the target favorites by a target user account in advance; and
determining, in response to a trigger operation on the resource object caching control, a target caching object from the resource objects in the target favorites and caching the target caching object in local storage space corresponding to the target user account, where the target caching object cached in the local storage space is used for display in an offline state.

In an optional implementation, determining a target caching object from the resource objects in the target favorites in response to a trigger operation on the resource object caching control includes:
displaying selectable states of the resource objects in the target favorites in response to the trigger operation on the resource object caching control; and
determining one or more resource objects as the target caching object in response to a selection operation for the one or more resource objects in the target favorites.

In an optional implementation, the method further includes:
displaying caching progress information of the target caching object in response to a trigger operation on a cached object viewing control.

In an optional implementation, the displaying caching progress information of the target caching object in response to a trigger operation on a cached object viewing control includes:
displaying a caching list corresponding to the local storage space in response to the trigger operation on the cached object viewing control, where the caching progress information of the target caching object is displayed in the caching list.

In an optional implementation, the method further includes:
displaying, in response to a display trigger operation on the first target caching object, a first target caching object in the caching list based on a caching resource stream corresponding to the caching list.

In an optional implementation, the method further includes:
displaying, in response to a trigger operation on a cached object viewing control, the target caching object based on a caching resource stream.

In an optional implementation, a number of caching objects in a caching state corresponding to the target user account is displayed in a display area of the resource object caching control.

In a second aspect, the present disclosure further provides a resource object processing apparatus, the apparatus includes:
a first display module, configured to display resource objects in a target favorites on a first page, where a resource object caching control is provided on the first page, and the resource objects are added to the target favorites by a target user account in advance; and
a first determination module, configured to determine, in response to a trigger operation on the resource object caching control, a target caching object from the resource objects in the target favorites and cache the target caching object in local storage space corresponding to the target user account, where the target caching object cached in the local storage space is used for display in an offline state.

In a third aspect, the present disclosure provides a computer-readable storage medium, where instructions are stored in the computer-readable storage medium, and the instructions, when executed by a terminal device, cause the terminal device to implement the above method.

In a fourth aspect, the present disclosure provides a resource object processing device, the resource object processing device includes a memory, a processor, and a computer program stored on the memory and executable on the processor, where the processor, when executing the computer program, implements the above method.

In a fifth aspect, the present disclosure provides a computer program product, the computer program product includes a computer program/instruction, the computer program/instruction, when executed by a processor, implements the above method.

Compared with the prior art, the technical solutions provided by embodiments of the present disclosure have at least the following advantages:

An embodiment of the present disclosure provides a resource object processing method, specifically, resource objects in a target favorites are displayed on a first page, where a resource object caching control is provided on the first page, and the resource objects are added to the target favorites by a target user account in advance; and a target caching object is determined from the resource objects in the target favorites and the target caching object is cached in local storage space corresponding to the target user account in response to a trigger operation on the resource object caching control, where the target caching object cached in the local storage space is used for display in an offline state.

### BRIEF DESCRIPTION OF THE DRAWINGS

The drawings herein, which are incorporated in and constitute a part of this specification, illustrate embodiments consistent with the present disclosure and, together with the description, serve to explain the principles of the present disclosure.

In order to more clearly explain the technical solutions in the embodiments of the present disclosure or in the prior art, the drawings that need to be used in the description of the embodiments or the prior art will be briefly introduced below. Obviously, for those of ordinary skill in the art, other drawings may be obtained according to these drawings without paying creative efforts.
FIG. 1 is a flowchart of a resource object processing method provided by an embodiment of the present disclosure;
FIG. 2 is a schematic diagram of a first page provided by an embodiment of the present disclosure;
FIG. 3 is a schematic diagram of another first page provided by an embodiment of the present disclosure;
FIG. 4 is a schematic diagram of a user's personal homepage provided by an embodiment of the present disclosure;
FIG. 5 is a schematic diagram of a favorites page provided by an embodiment of the present disclosure;
FIG. 6 is a schematic diagram of another first page provided by an embodiment of the present disclosure;
FIG. 7 is a schematic diagram of another first page provided by an embodiment of the present disclosure;
FIG. 8 is a schematic diagram of another first page provided by an embodiment of the present disclosure;
FIG. 9 is a schematic diagram of a caching list page provided by an embodiment of the present disclosure;
FIG. 10 is a schematic diagram of an offline mode playback page provided by an embodiment of the present disclosure;
FIG. 11 is a structural schematic diagram of a resource object processing apparatus provided by an embodiment of the present disclosure; and
FIG. 12 is a structural schematic diagram of a resource object processing device provided by an embodiment of the present disclosure.

### DETAILED DESCRIPTION OF EMBODIMENTS

In order to understand the above objectives, features, and advantages of the present disclosure more clearly, the solutions of the present disclosure will be further described below. It should be noted that the embodiments of the present disclosure and the features in the embodiments may be combined with each other without conflict.

Many specific details are set forth in the following description to fully understand the present disclosure, but the present disclosure may also be implemented in other ways different from those described herein; obviously, the embodiments in the specification are part of the embodiments of the present disclosure, but not all of the embodiments.

At present, in the related art, resource objects in favorites are often the first choice for users to watch again; however, the resource objects in the favorites may be browsed only in a good network environment, and in a poor network environment, users are not supported to browse the resource objects in the favorites. Therefore, how to enrich relevant interaction manners of the resource objects in the favorites to satisfy users' growing diverse requirements has become an urgent technical issue that needs to be solved.

To this end, an embodiment of the present disclosure provides a resource object processing method, specifically, resource objects in a target favorites are displayed on a first page, where a resource object caching control is provided on the first page, and the resource objects are added to the target favorites by a target user account in advance. Then, in response to a trigger operation on the resource object caching control, a target caching object is determined from the resource objects in the target favorites and the target caching object is cached in local storage space corresponding to the target user account, where the target caching object cached in the local storage space is used for display in an offline state.

The embodiment of the present disclosure is capable of supporting caching processing of the resource objects in the favorites, so that the resource objects in the favorites may also be displayed in the offline state, which enriches relevant interaction manners of the resource objects in the favorites, thereby improving user experience.

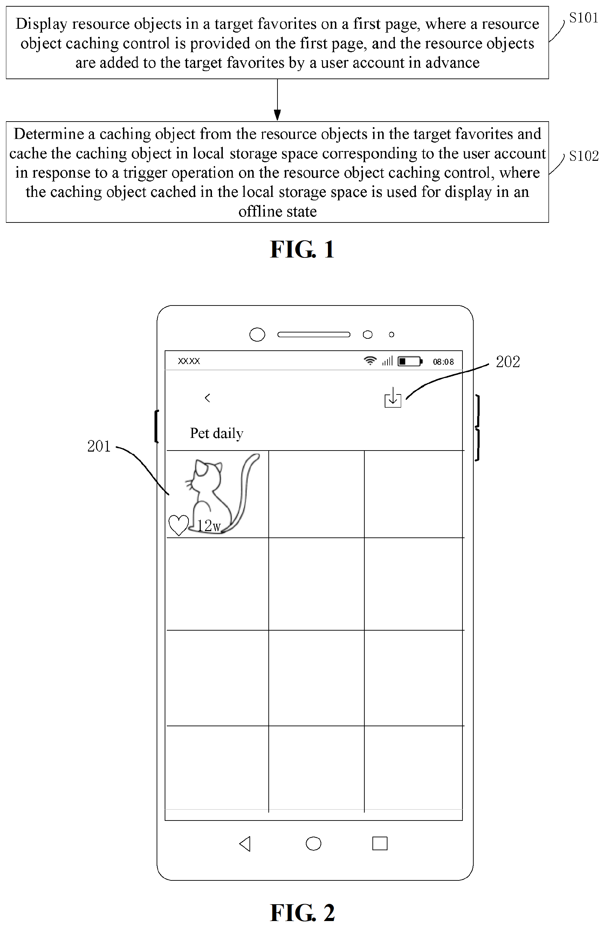

Specifically, an embodiment of the present disclosure provides a resource object processing method, FIG. 1 is a flowchart of a resource object processing method provided by an embodiment of the present disclosure, which specifically includes:
S101: resource objects are displayed in a target favorites on a first page.

Where, a resource object caching control is provided on the first page, and the resource objects are added to the target favorites by a target user account in advance.

The resource object processing method provided by embodiments of the present disclosure may be applied to a client, specifically, the client may be deployed on a terminal such as a smart phone, a tablet computer, a desktop computer, etc.

In an embodiment of the present disclosure, the first page may be a collection content display page of any favorites, specifically, the resource objects in the target favorites are displayed on the first page. The resource objects are added to the target favorites by the target user account in advance. The resource objects in the target favorites may include resource objects of various subjects, such as videos, pictures and texts, etc. Specifically, cover pictures, popularity information, the number of resource objects, etc., of the resource objects in the target favorites may be displayed on the first page.

In an embodiment of the present disclosure, the resource object caching control provided on the first page is used for caching the resource objects in the target favorites into the local storage space of the target user account, that is, the user may cache the resource objects in the target favorites by triggering the resource object caching control, so as to support displaying the resource objects in the target favorites in the offline state.

In an embodiment of the present disclosure, the manner of providing the resource object caching control on the first page may include directly displaying the resource object caching control on the first page.

FIG. 2 is a schematic diagram of a first page provided by an embodiment of the present disclosure, where resource objects 201 in a target favorites and a resource object caching control 202 are displayed on the first page, where cover pictures, popularity data, etc. of the resource objects 201 are displayed on the first page. The target favorites may include one or more resource objects, all of which are displayed on the first page.

The manner of providing the resource object caching control on the first page may further include displaying a management function entry on the first page and displaying the resource object caching control by triggering the management function entry.

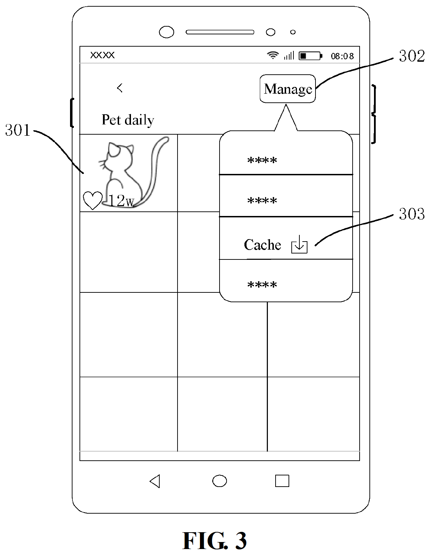

FIG. 3 is a schematic diagram of another first page provided by an embodiment of the present disclosure, where resource objects 301 in a target favorites and a management function entry 302 are displayed on the first page, and a resource object caching control 303 is displayed by triggering the management function entry 302, where cover pictures, popularity data, etc. of the resource objects 301 are displayed on the first page.

In practical applications, before displaying the resource objects in the target favorites on the first page, it is necessary to trigger the display of the first page.

Specifically, in an application scenario, when a trigger operation on a favorites control on a user's personal homepage is received, a favorites page is displayed, information about favorites created by the target user account is displayed on the favorites page, which may specifically include favorites names, cover pictures of resource objects respectively added to the favorites, etc., and each of the favorites is used for storing resource objects added by the target user account. The target favorites may be any of the favorites under the target user account.

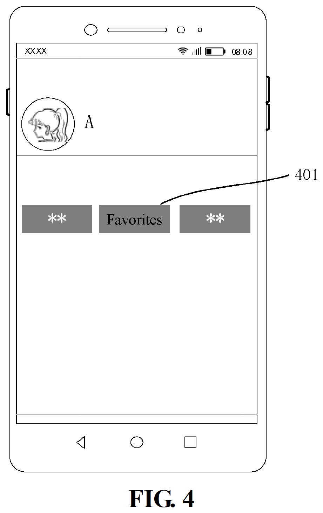

FIG. 4 is a schematic diagram of a user's personal homepage provided by an embodiment of the present disclosure. A favorites control 401 is displayed on the user's personal homepage, and when a trigger operation on the favorites control is received, a favorites page is displayed, and each of the favorites under the target user account is displayed on the favorites page.

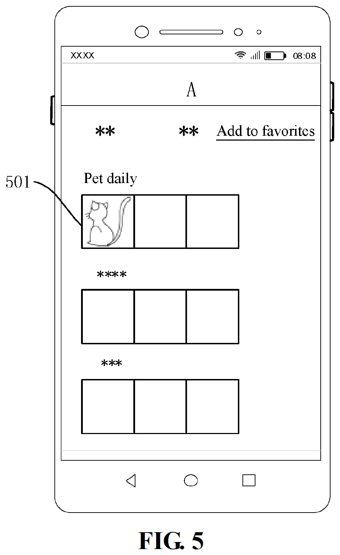

FIG. 5 is a schematic diagram of a favorites page provided by an embodiment of the present disclosure. Information about one or more favorites under the target user account is displayed on the favorites page, specifically, a favorites name, cover pictures of at least one resource object in each of the favorites, etc. are displayed on the favorites page. When a trigger operation on a target favorites (assuming that the target favorites is a "pet daily" favorites) is received, a first page is displayed, resource objects in the target favorites are displayed on the first page, and a resource object caching control is provided on the first page. The first page is as shown in FIG. 2 and FIG. 3 mentioned above.

S102: a target caching object is determined from the resource objects in the target favorites in response to a trigger operation on the resource object caching control and caching the target caching object in local storage space corresponding to the target user account.

Where, the target caching object cached in the local storage space is used for display in an offline state.

In an embodiment of the present disclosure, based on the resource object caching control provided on the first page, the user may trigger the resource object caching control to cache the target caching object into the local storage space corresponding to the target user account, where the target caching object is one or more resource objects in the target favorites.

Specifically, when the trigger operation on the resource object caching control provided on the first page is received, the selectable states of the resource objects in the target favorites are displayed on the first page. When a selection operation for one or more resource objects in the target favorites is received, the one or more resource objects are determined as the target caching object.

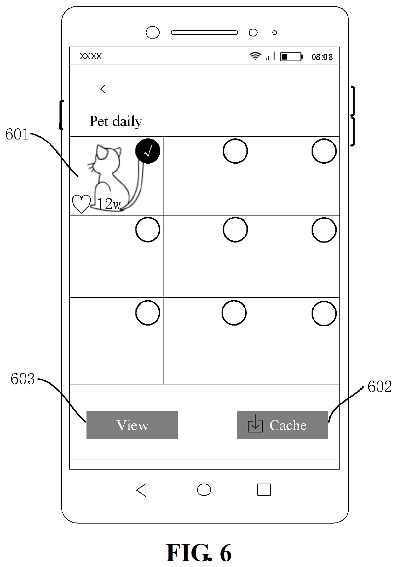

FIG. 6 is a schematic diagram of another first page provided by an embodiment of the present disclosure. The selectable states of the resource objects in the target favorites are displayed on the first page, and when a selection operation for a resource object 601 is received, the resource object 601 is determined as the target caching object.

In practical applications, after the target caching object is determined, the target caching object may be cached into the local cache space corresponding to the target user account by triggering the resource object caching control based on the target caching object. That is, the user may download the target caching object locally by triggering the resource object caching control, which supports displaying the resource objects in the target favorites in the offline state.

As shown in a resource object caching control 602 in the first page in FIG. 6 mentioned above, when the resource object caching control is triggered, the selected resource object 601, that is, the target caching object, is cached into the local cache space corresponding to the target user account.

In practical applications, in order to prompt the number of target caching objects, a number identification of caching objects may also be set in an embodiment of the present disclosure, which is used for representing the number of target caching objects. Specifically, when the selection operation for the resource object is received, the number identification of caching objects is updated and displayed on the first page.

In practical applications, in order to reduce memory occupancy and reduce the impact on terminal performance, in an optional implementation, a cache number threshold may be set for the target caching objects. Specifically, when the number of target caching objects is greater than the cache number threshold, a threshold prompt message is displayed, which is used to prompt the user that the number of target caching objects exceeds an upper limit of the cache number.

In another optional implementation, when the target caching object is being cached, original cache content in the local storage space corresponding to the target user account may be cleaned up. Specifically, when the trigger operation on the resource object caching control provided on the first page is received, a deletion prompt message is displayed on the first page, which is used to notify that the current cache content will overwrite the original cache content in the local storage space.

In the resource object processing method provided by an embodiment of the present disclosure, the resource objects in the target favorites are displayed on the first page, where the resource object caching control is provided on the first page, and the resource objects are added to the target favorites by the target user account in advance; and the target caching object is determined from the resource objects in the target favorites in response to the trigger operation on the resource object caching control and the target caching object is cached in the local storage space corresponding to the target user account, where the target caching object cached in the local storage space is used to display in the offline state.

The embodiment of the present disclosure is capable of supporting the caching processing of the resource objects in the favorites, so that the resource objects in the favorites may also be displayed in the offline state, which enriches the relevant interaction manners of the resource objects in the favorites, thereby improving the user experience.

On the basis of the above, in the process of triggering the resource object caching control to cache the target caching object in the target favorites into the local storage space corresponding to the target user account, in order to display to the user that the current target caching object is in the caching process, in an optional implementation, the number of caching objects in a caching state may be displayed on the first page, which is used for representing the cache state of the current target caching object.

Specifically, when the trigger on the resource object caching control provided on the first page is received, caching the target caching object is started, and the number of caching objects in the caching state corresponding to the target user account is displayed in the display area of the resource object caching control.

In addition, a cache prompt message may also be displayed on the first page, which is used for prompting current caching progress information. The cache prompt message may include a cache success prompt message, a cache failure prompt message, and a caching prompt message, the cache success prompt message is used for prompting that the current caching object has been cached into the local storage space corresponding to the target user account, the cache failure prompt message is used for prompting that the local storage space corresponding to the current target user account is insufficient, or the current network environment is poor and the cache fails, or the current cache system has a vulnerability resulting in the cache failure, etc., and the caching prompt message is used for prompting that the current caching object is in the caching process.

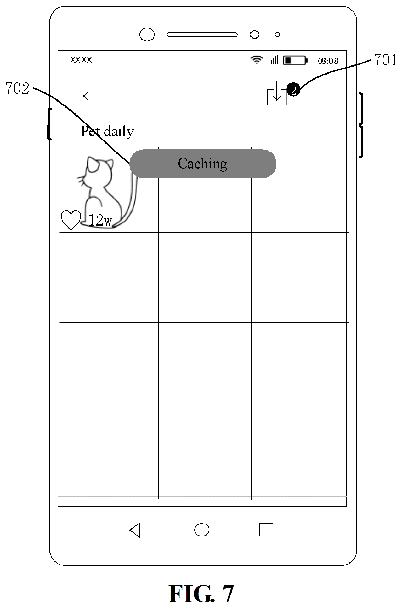

FIG. 7 is a schematic diagram of another first page provided by an embodiment of the present disclosure, where the number of caching objects 701 in the caching state corresponding to the target account and a cache prompt message 702 are displayed on the first page.

In another optional implementation, when the trigger on the resource object caching control provided on the first page is received, caching the target caching object is started, the resource objects in the target favorites and the resource object caching control are displayed on the first page, and both the resource objects and the resource object caching control are in a non-selectable state, where the resource objects being in the non-selectable state and the resource object caching control being in the non-selectable state may both be used for representing that the target caching object is currently being cached, in addition, the cache prompt message may also be displayed on the first page.

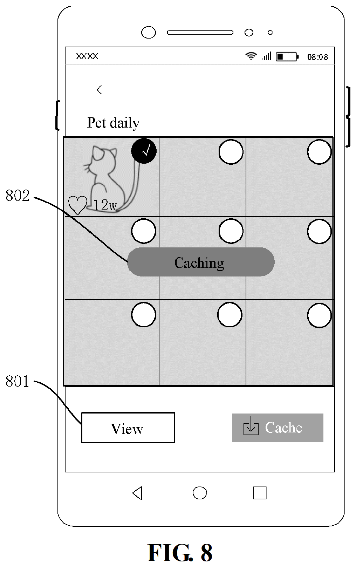

FIG. 8 is a schematic diagram of another first page provided by an embodiment of the present disclosure, where the resource objects in the target favorites displayed on the first page are in a non-selectable state, the resource object caching control is also in a non-selectable state, and a cache prompt message 802 is displayed on the first page.

In practical applications, to support the user to view the caching progress information of the target caching object, a cached object viewing control may be provided on the first page in an embodiment of the present disclosure, and when a trigger operation on the cached object viewing control is received, the caching progress information of the target caching object is displayed, such as the cached object viewing control 801 on the first page as shown in FIG. 8 mentioned above.

In an optional implementation, when the trigger operation on the cached object viewing control is received, a caching list page is displayed, the caching list corresponding to the local storage space is displayed on the caching list page, where the caching progress information of the target caching object is displayed in the caching list, and the caching progress information may include caching progress information such as being cached, cache successful, and cache failed, etc.

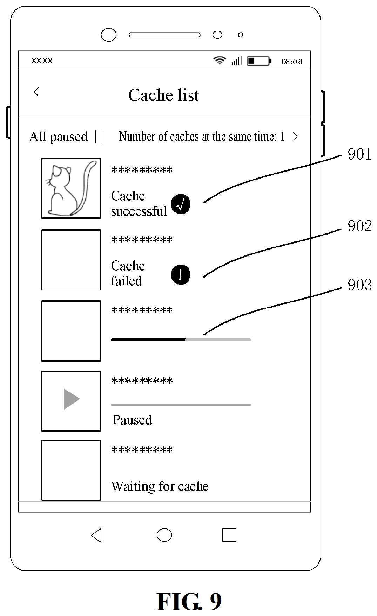

FIG. 9 is a schematic diagram of a caching list page provided by an embodiment of the present disclosure. The caching list corresponding to the local storage space is displayed on the caching list page, and the caching progress information of the target caching object is displayed in the caching list page, such as cache success 901, cache failure 902, and being cached 903, etc.

Based on the caching list displayed on the caching list page, when a display trigger operation on a first target caching object in the caching list is received, an offline mode playback page is displayed, and on the offline mode playback page, the first target caching object is displayed based on a caching resource stream corresponding to the caching list, where the first target caching object is any target caching object under the target user account, author information, description information, popularity, etc. of the first target caching object may be specifically displayed on the offline mode playback page, and an offline setting function may also be displayed, which is used for setting a related function for the first target caching object displayed in the offline state.

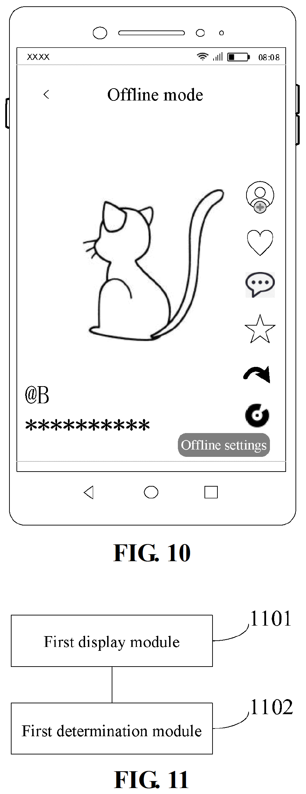

FIG. 10 is a schematic diagram of an offline mode playback page provided by an embodiment of the present disclosure. The offline mode playback page is used for displaying the first target caching object, and specifically, author information, description information, popularity information of the first target caching object, and an offline setting control are displayed on the offline mode playback page, and by triggering the offline setting control, the related function may be set for the first target caching object displayed in the offline state.

If the first target caching object is a caching object that has been completely cached or the first target caching object is a caching object that has been partially cached, when the display trigger operation on the first target caching object is received, the first target caching object is displayed on the offline mode playback page based on the caching resource stream.

If the first target caching object is a caching object that is not cached or fails to be cached, when the display trigger operation on the first target caching object is received, the target caching object is not displayed on the offline mode playback page, and prompt information is displayed, which is used for prompting the caching progress information of the first target caching object, such as "cache failed, please recache", "waiting for cache, please wait".

In order to simplify the interaction path and display the target caching object in the offline state to the user in time, the cached object viewing control may also be triggered to directly display the first target caching object on the offline mode playback page, where the first target caching object is at least one target caching object existing in the caching resource stream, and the caching progress information of the first target caching object is that the cache is successful or the cache of part of the content is successful, that is, if there is at least one caching object in the caching resource stream or there is a partially cached caching object, when the cached object viewing control is triggered, the caching object is displayed on the offline mode playback page based on the caching resource stream.

Specifically, in an optional implementation, when the trigger operation on the cached object viewing control is received, the offline mode playback page is displayed, and on the offline mode playback page, the first target caching object is displayed based on the caching resource stream.

If there is no target caching object in the caching resource stream, when the cached object viewing control is triggered, the target caching object is not displayed on the offline mode playback page, which is used for representing that there is no target caching object in the current caching resource stream. The target caching object not being displayed on the offline mode playback page may be specifically grayed out.

On the basis of the above, there is another optional implementation, when the trigger operation on the cached object viewing control is received, it is detected whether the first target caching object exists in the current caching resource stream, if it is detected that the first target caching object exists in the current caching resource stream, the offline mode playback page is displayed, and the first target caching object is displayed on the offline mode playback page; and if it is detected that the first target caching object does not exist in the current caching resource stream, the caching list page is displayed, and the caching list and the caching progress information of the target caching object are displayed on the caching list page.

Based on the above method embodiments, the present disclosure further provides a resource object processing apparatus, FIG. 11 is a schematic structural diagram of a resource object processing apparatus provided by an embodiment of the present disclosure, the apparatus includes:
a first display module 1101, configured to display resource objects in a target favorites on a first page, where a resource object caching control is provided on the first page, and the resource objects are added to the target favorites by a target user account in advance; and
a first determination module 1102, configured to determine, in response to a trigger operation on the resource object caching control, a target caching object from the resource objects in the target favorites and cache the target caching object in local storage space corresponding to the target user account, where the target caching object cached in the local storage space is used for display in an offline state.

In an optional implementation, the first determination module includes:
a first display sub-module, configured to display, in response to the trigger operation on the resource object caching control, selectable states of the resource objects in the target favorites; and
a first determination sub-module, configured to determine, in response to a selection operation for the one or more resource objects in the target favorites, one or more resource objects as the target caching object.

In an optional implementation, the apparatus further includes:
a first display module, configured to display, in response to a trigger operation on a cached object viewing control, caching progress information of the target caching object .

In an optional implementation, the first display module is further configured to:
display, in response to the trigger operation on the cached object viewing control, a caching list corresponding to the local storage space, where the caching progress information of the target caching object is displayed in the caching list.

In an optional implementation, the apparatus further includes:
a second display module, configured to display, in response to a display trigger operation on the first target caching object, a first target caching object in the caching list based on a caching resource stream corresponding to the caching list.

In an optional implementation, the apparatus further includes:
a third display module, configured to display, in response to a trigger operation on a cached object viewing control, the target caching object based on a caching resource stream.

In an optional implementation, a number of caching objects in a caching state corresponding to the target user account is displayed in a display area of the resource object caching control.

In the resource object processing apparatus provided by an embodiment of the present disclosure, the resource objects in the target favorites are displayed on the first page, where the resource object caching control is provided on the first page, and the resource objects are added to the target favorites by the target user account in advance; and the target caching object is determined from the resource objects in the target favorites in response to the trigger operation on the resource object caching control and the target caching object is cached in the local storage space corresponding to the target user account, where the target caching object cached in the local storage space is used for display in the offline state.

The embodiment of the present disclosure is capable of supporting caching processing of the resource objects in the favorites, so that the resource objects in the favorites may also be displayed in the offline state, which enriches relevant interaction manners of the resource objects in the favorites, thereby improving user experience.

In addition to the above methods and apparatuses, an embodiment of the present disclosure further provides a computer-readable storage medium, where instructions are stored in the computer-readable storage medium, and the instructions, when executed by a terminal device, cause the terminal device to implement the resource object processing method according to the embodiment of the present disclosure.

An embodiment of the present disclosure further provides a computer program product, the computer program product includes a computer program/instruction, the computer program/instruction, when executed by a processor, implements the resource object processing method according to the embodiment of the present disclosure.

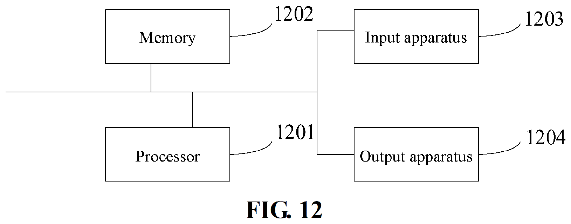

In addition, an embodiment of the present disclosure further provides a resource object processing device, as shown in FIG. 12, which may include:
a processor 1201, a memory 1202, an input apparatus 1203, and an output apparatus 1204. The number of processor 1201 in the resource object processing device may be one or more, and one processor is taken as an example in FIG. 12. In some embodiments of the present disclosure, the processor 1201, the memory 1202, the input apparatus 1203, and the output apparatus 1204 may be connected by a bus or in other ways, where the connection by the bus is taken as an example in FIG. 12.

The memory 1202 may be used for storing software programs and modules, and the processor 1201 executes various functional applications and data processing of the resource object processing device by running the software programs and modules stored in the memory 1202. The memory 1202 may mainly include a program storage area and a data storage area, where the program storage area may store an operating system, an application program required by at least one function, etc. In addition, the memory 1202 may include a highspeed random-access memory or a non-volatile memory, such as at least one magnetic disk storage device, a flash memory device, or other volatile solid-state storage devices. The input apparatus 1203 may be used for receiving input digital or character information, and generating a signal input related to user settings and function control of the resource object processing device.

Specifically, in the present embodiment, the processor 1201 will load executable files corresponding to processes of one or more application programs into the memory 1202 according to the following instructions, and the processor 1201 runs the application programs stored in the memory 1202, so as to implement various functions of the above resource object processing device.

It should be noted that in this paper, relational terms such as "first" and "second" are only used to distinguish one entity or operation from another entity or operation, and do not necessarily require or imply any actual relationship or order between these entities or operations. Moreover, the terms "include", "include" or any other variation thereof are intended to cover non-exclusive inclusion, so that a process, method, object or device including a series of elements includes not only those elements, but also other elements not explicitly listed or elements inherent to such process, method, object or device. Without further restrictions, an element defined by the phrase "includes a" does not exclude the presence of additional identical elements in the process, method, object or device that includes the element.

The above descriptions are only specific implementations of the present disclosure, so that those skilled in the art may understand or implement the present disclosure. Various modifications to these embodiments will be obvious to those skilled in the art, and the general principles defined herein may be implemented in other embodiments without departing from the spirit or scope of the present disclosure. Therefore, the present disclosure will not be limited to the embodiments described herein, but rather to the widest scope consistent with the principles and novel features disclosed herein.

## Claims

1. A resource object processing method, comprising:
displaying resource objects in a target favorites on a first page, wherein a resource object caching control is provided on the first page, and the resource objects are added to the target favorites by a target user account in advance; and
determining, in response to a trigger operation on the resource object caching control, a target caching object from the resource objects in the target favorites, and caching the target caching object into a local storage space corresponding to the target user account, wherein the target caching object cached in the local storage space is used for display in an offline state.

2. The method of claim 1, wherein the determining, in response to a trigger operation on the resource object caching control, a target caching object from the resource objects in the target favorites comprises:
displaying, in response to the trigger operation on the resource object caching control, selectable states of the resource objects in the target favorites; and
determining, in response to a selection operation for the one or more resource objects in the target favorites, one or more resource objects as the target caching object.

3. The method of claim 1, wherein the method further comprises:
displaying, in response to a trigger operation on a cached object viewing control, caching progress information of the target caching object.

4. The method of claim 3, wherein displaying, in response to a trigger operation on a cached object viewing control, caching progress information of the target caching object comprises:
displaying, in response to the trigger operation on the cached object viewing control, a caching list corresponding to the local storage space, wherein the caching progress information of the target caching object is displayed in the caching list.

5. The method of claim 4, wherein the method further comprises:
displaying, in response to a display trigger operation on a first target caching object, the first target caching object in the caching list based on a caching resource stream corresponding to the caching list.

6. The method of claim 1, wherein the method further comprises:
displaying, in response to a trigger operation on a cached object viewing control, the target caching object based on a caching resource stream.

7. The method of claim 1, wherein a number of caching objects in a caching state corresponding to the target user account is displayed in a display area of the resource object caching control.

8. A resource object processing apparatus, comprising:
a first display module, configured to display resource objects in a target favorites on a first page, wherein a resource object caching control is provided on the first page, and the resource objects are added to the target favorites by a target user account in advance; and
a first determination module, configured to determine, in response to a trigger operation on the resource object caching control, a target caching object from the resource objects in the target favorites, and cache the target caching object into a local storage space corresponding to the target user account, wherein the target caching object cached in the local storage space is used for display in an offline state.

9. A computer-readable storage medium, wherein instructions are stored in the computer-readable storage medium, and the instructions, when executed by a terminal device, cause the terminal device to implement the method of any of claims 1 to 7.

10. A resource object processing device, comprising a memory, a processor, and a computer program stored on the memory and executable on the processor, wherein the processor, when executing the computer program, implements the method of any of claims 1 to 7.
